(19) Europäisches Patentamt
European Patent Office
Office européen des brevets

(11) **EP 4 714 564 A1**

(12) **EUROPEAN PATENT APPLICATION**
published in accordance with Art. 153(4) EPC

(43) Date of publication:
**25.03.2026 Bulletin 2026/13**

(21) Application number: **24807237.3**

(22) Date of filing: **15.05.2024**

(51) International Patent Classification (IPC):
**B05C 9/10** (2006.01)    **B05C 13/02** (2006.01)
**G01B 11/24** (2006.01)

(52) Cooperative Patent Classification (CPC):
**B05C 9/10; B05C 13/02; G01B 11/24**

(86) International application number:
**PCT/JP2024/017990**

(87) International publication number:
**WO 2024/237286 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.05.2023 JP 2023080771**

(71) Applicant: **NHK Spring Co., Ltd.
Yokohama-shi, Kanagawa 236-0004 (JP)**

(72) Inventors:
• **KAMIYA, Takafumi
Yokohama-shi, Kanagawa 236-0004 (JP)**
• **SHIRAO, Masato
Yokohama-shi, Kanagawa 236-0004 (JP)**

(74) Representative: **Hoffmann Eitle
Patent- und Rechtsanwälte PartmbB
Arabellastraße 30
81925 München (DE)**

(54) **WIRE DATA PROCESSING SYSTEM, CONTROL DEVICE, CONTROL METHOD, AND CONTROL PROGRAM**

(57)    A wire data processing system 1 includes a support mechanism 4 configured to support a coil spring W and enable the coil spring W to rotate about a specific axis Ax following the central axis of the coil spring W, a sensor 5 configured to measure the outer shape position of the wire of the coil spring W and output wire data, and a control device 3 configured to control the operations of the support mechanism 4 and the sensor 5. The control device 3 includes a support mechanism control unit configured to operate the support mechanism 4 and rotate the coil spring W about the specific axis Ax, a sensor control unit configured to operate the sensor 5 and acquire the wire data from the sensor 5, a shape specifying unit configured to specify a cross-sectional shape of the wire based on the wire data, and a processing execution unit configured to execute processing corresponding to the cross-sectional shape of the wire with respect to the wire data.

FIG.1

**Description**

Field

The present invention relates to a wire data processing system, a control device, a control method, and a control program.

Background

Conventionally, a shape measurement method described below is known as a shape measurement method of a coil spring (see, for example, Patent Literature 1).

In the shape measurement method described in Patent Literature 1, the surface of the coil spring is irradiated with linear slit light spreading in an axial direction of the coil spring fixed to a rotation stage, and the reflected light is photographed by a camera to acquire wire data. Then, in the shape measurement method, the wire data and a rotation angle when the coil spring is rotated about the axis are stored in association with each other, and the shape of the coil spring is measured by performing image processing on the wire data.

In addition, as a coil spring, a coil spring in which a cross-sectional shape of a wire changes from both end portions toward a central portion is known (see, for example, Patent Literature 2).

In the coil spring described in Patent Literature 2, the cross-sectional shape of the wire at both end portions is rectangular, and the cross-sectional shape of the wire at the central portion is circular, so that the cross-sectional shape of the wire gradually changes from both end portions toward the central portion.

Citation List

Patent Literature

Patent Literature 1: JP 2010-101693 A
Patent Literature 2: JP S62-155342 A

Summary

Technical Problem

However, in the shape measurement method described in Patent Literature 1, it is assumed that the cross-sectional shape of the wire of the coil spring is circular, and the shape of the coil spring is measured by executing processing corresponding to the circle with respect to the wire data. Therefore, in a case where the coil spring described in Patent Literature 2 in which the cross-sectional shape of the wire varies depending on the position is measured by the shape measurement method described in Patent Literature 1, the processing corresponding to a circle is executed with respect to the wire data, and thus, it is not possible to accurately measure the shape of the coil spring for a portion where the cross-sectional shape is not circular.

From the above, there is a demand for a technique capable of executing appropriate processing with respect to the wire data.

The present invention has been made in view of the above, and an object thereof is to provide a wire data processing system, a control device, a control method, and a control program capable of executing appropriate processing with respect to wire data.

Solution to Problem

To solve the above-described problem and achieve the object, a wire data processing system according to the present invention includes: a support mechanism configured to support a coil spring and enable the coil spring to rotate about a specific axis following a central axis of the coil spring; a sensor configured to measure an outer shape position of a wire of the coil spring and output wire data; and a control device configured to control operations of the support mechanism and the sensor, wherein the control device includes a support mechanism control unit configured to operate the support mechanism and rotate the coil spring about the specific axis, a sensor control unit configured to operate the sensor and acquire the wire data from the sensor, a shape specifying unit configured to specify a cross-sectional shape of the wire based on the wire data, and a processing execution unit configured to execute processing corresponding to the cross-sectional shape of the wire with respect to the wire data.

Moreover, in the above-described wire data processing system according to the present invention, the shape specifying unit includes a virtual figure estimation unit configured to estimate a virtual figure of a predetermined shape conforming to a shape configured by position coordinates corresponding to an outer shape position of the wire in the wire data, an error calculation unit configured to calculate an error between the position coordinates and the virtual figure, and a specifying unit configured to specify a cross-sectional shape of the wire based on the error.

Moreover, in the above-described wire data processing system according to the present invention, the virtual figure estimation unit is configured to estimate a circle that is the virtual figure conforming to the shape configured by the position coordinates by a least squares method using the position coordinates.

Moreover, in the above-described wire data processing system according to the present invention, the coil spring has a cross-sectional shape of the wire that varies depending on a position.

Moreover, the above-described wire data processing system according to the present invention further includes: an application device configured to apply a coating material to the coil spring, wherein the processing execution unit is configured to calculate an application position of the coating material to the coil spring corresponding to the cross-sectional shape of the wire by executing processing corresponding to the cross-sectional shape of the wire with respect to the wire data, and the control device includes a movement control unit configured to move the application device and the support mechanism relative to each other and positions the application device at a position where the coating material is applied from the application device to the application position, and an application device control unit configured to operate the application device to apply the coating material from the application device to the application position.

Moreover, the above-described wire data processing system according to the present invention further includes: a moving device configured to support the application device and move the application device, wherein the movement control unit is configured to operate the moving device and position the application device at a position where the coating material is applied from the application device to the application position.

Moreover, a control device according to the present invention includes: a support mechanism control unit configured to operate a support mechanism that supports a coil spring and rotates the coil spring about a specific axis following a central axis of the coil spring; a sensor control unit configured to operate a sensor that measures an outer shape position of a wire of the coil spring and outputs wire data, and acquire the wire data; a shape specifying unit configured to specify a cross-sectional shape of the wire based on the wire data; and a processing execution unit configured to execute processing corresponding to the cross-sectional shape of the wire with respect to the wire data.

Moreover, a control method according to the present invention executed by a control device of a wire data processing system includes: a support mechanism control step of operating a support mechanism configured to support a coil spring and rotating the coil spring about a specific axis following a central axis of the coil spring; a sensor control step of operating a sensor configured to measure an outer shape position of a wire of the coil spring and output wire data, and acquiring the wire data; a shape specifying step of specifying a cross-sectional shape of the wire based on the wire data; and a processing execution step of executing processing corresponding to the cross-sectional shape of the wire with respect to the wire data.

Moreover, a control program according to the present invention causes a computer to execute: a support mechanism control step of operating a support mechanism configured to support a coil spring and rotating the coil spring about a specific axis following a central axis of the coil spring; a sensor control step of operating a sensor configured to measure an outer shape position of a wire of the coil spring and output wire data, and acquiring the wire data; a shape specifying step of specifying a cross-sectional shape of the wire based on the wire data; and a processing execution step of executing processing corresponding to the cross-sectional shape of the wire with respect to the wire data.

Advantageous Effects of Invention

With the wire data processing system, the control device, the control method, and the control program according to the present invention, appropriate processing can be executed with respect to wire data.

Brief Description of Drawings

FIG. 1 is a view illustrating a configuration of a coating material application system according to an embodiment.
FIG. 2 is a view illustrating cross-sectional shapes of a wire of a coil spring.
FIG. 3 is a view describing a positional relationship between a sensor and a dispenser.
FIG. 4 is a block diagram illustrating a configuration of a control device.
FIG. 5 is a flowchart illustrating a control method executed by the control device.
FIG. 6 is a flowchart illustrating a shape specifying step (Step S4).

FIG. 7 is views describing the shape specifying step (Step S4).

FIG. 8 is a view describing a processing execution step (Step S5) when the cross-sectional shape of the wire of the coil spring is specified as "circular".

FIG. 9 is a view describing a processing execution step (Step S5) when the cross-sectional shape of the wire of the coil spring is specified as "rectangular".

Description of Embodiments

Hereinafter, modes for carrying out the present invention (hereinafter, embodiments) will be described with reference to the drawings. Note that the present invention is not limited by the embodiments described below. Further, in the description of the drawings, the same portions are denoted by the same reference numerals.

Hereinafter, a case where the wire data processing system according to the present invention is applied to a coating material application system that applies a coating material to a coil spring will be described as an example.

[Schematic Configuration of Coating Material Application System]

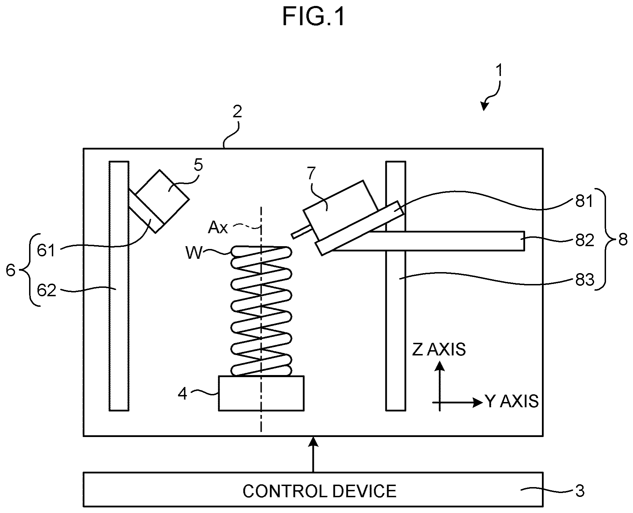

FIG. 1 is a view illustrating a configuration of a coating material application system 1 according to an embodiment.

As illustrated in FIG. 1, the coating material application system 1 includes a coating material application device 2 and a control device 3. Then, in the coating material application system 1, the coating material application device 2 operates under the control of the control device 3, so that a coating material such as a thermosetting resin or a thermoplastic resin is applied to a specific position (application position) of a coil spring W. Here, the application position is a portion where a wire of the coil spring W comes into contact with the wire when the coil spring W is compressed. That is, by applying the coating material to the application position, the contact damage of the wire of the coil spring W at the application position is alleviated.

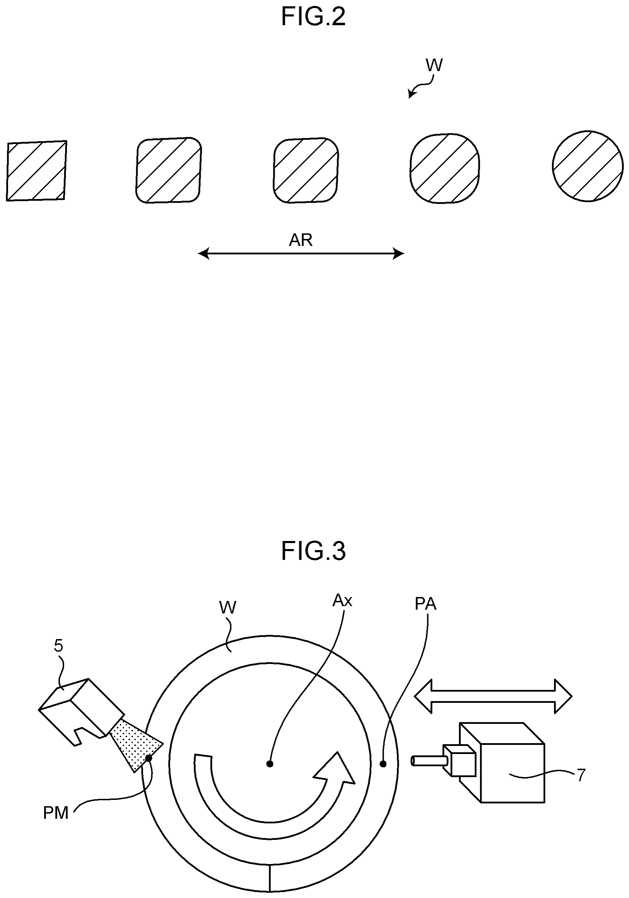

FIG. 2 is a view illustrating cross-sectional shapes of the wire of the coil spring W. Specifically, FIG. 2 is a view in which the cross-sectional shapes of the wire of the coil spring W from the end portion to the central portion of the coil spring W are arranged along a central axis of the coil spring W. That is, a direction AR in FIG. 2 is a direction along the central axis of the coil spring W.

In the present embodiment, as illustrated in FIG. 2, the cross-sectional shape of the wire of the coil spring W gradually changes from rectangular to circular from the end portion (left side in FIG. 2) toward the central portion (right side in FIG. 2) of the coil spring W.

[Configuration of Coating Material Application Device]

First, the configuration of the coating material application device 2 will be described.

Note that, in describing the configuration of the coating material application device 2, an axis along a vertical direction (up-down direction in FIG. 1) is defined as a Z axis (FIG. 1), and one axis (axis along a left-right direction in FIG. 1) of two axes orthogonal to the Z axis is defined as a Y axis (FIG. 1).

As illustrated in FIG. 1, the coating material application device 2 includes a support base 4, a sensor 5, a first moving device 6, a dispenser 7, and a second moving device 8.

The support base 4 corresponds to a support mechanism according to the present invention. As illustrated in FIG. 1, the support base 4 supports the coil spring W. Specifically, the coil spring W is placed on the support base 4 in a position in which the central axis of the coil spring W follows the Z axis. Then, the support base 4 is configured to include a servo motor and the like, and is configured to be rotatable about a specific axis Ax (FIG. 1) following the central axis of the coil spring W under the control of the control device 3. In the present embodiment, the specific axis Ax is an axis parallel to the Z axis.

The sensor 5 measures an outer shape position of the wire of the coil spring W under the control of the control device 3. In the present embodiment, the sensor 5 includes a laser sensor. More specifically, the sensor 5 emits laser light linearly along a YZ plane from a direction inclined 45° with respect to the Y axis and the Z axis. Then, the sensor 5 is configured to receive the laser light reflected from the wire of the coil spring W with an imaging element such as a complementary metal oxide semiconductor (CMOS) so as to be able to measure a profile of a portion of the wire that has reflected the linear laser light. In addition, the sensor 5 outputs the wire data obtained by measuring the outer shape position of the wire of the coil spring W to the control device 3. Note that the inclination angle of the sensor 5 with respect to the Y axis and the Z axis is not limited to 45°, and other inclination angles may be used.

The first moving device 6 supports the sensor 5 and moves the sensor 5. As illustrated in FIG. 1, the first moving device 6 includes a slider 61 that supports the sensor 5, a guide rail 62 extending along the Z axis, a servo motor (not illustrated), and the like. Then, in the first moving device 6, the slider 61 moves on the guide rail 62 along the Z axis under the control of the control device 3. That is, in the present embodiment, the first moving device 6 moves the sensor 5 only along the specific axis Ax.

The dispenser 7 corresponds to an application device according to the present invention, and applies the coating material to the coil spring W under the control of the control device 3. Note that the application device according to the present invention is not limited to the dispenser 7, and other application devices may be adopted.

The second moving device 8 corresponds to a moving device according to the present invention, supports the dispenser 7, and moves the dispenser 7. As illustrated in FIG. 1, the second moving device 8 includes a slider 81 that supports the dispenser 7, a guide rail 82 extending along the Y axis, a guide rail 83 extending along the Z axis, and a servo motor (not illustrated), and the like. Then, in the second moving device 8, the slider 81 moves on the guide rail 82 along the Y axis and the guide rail 82 moves on the guide rail 83 along the Z axis under the control of the control device 3. That is, in the present embodiment, the second moving device 8 moves the dispenser 7 only along each of the specific axis Ax and the Y axis.

[Regarding Positional Relationship between Sensor and Dispenser]

Next, a positional relationship between the sensor 5 and the dispenser 7 described above will be described.

FIG. 3 is a view describing a positional relationship between the sensor 5 and the dispenser 7. Specifically, FIG. 3 is a view of the sensor 5 and the dispenser 7 as viewed from above along the Z axis.

As illustrated in FIG. 3, a measurement position PM of the outer shape position of the wire of the coil spring W by the sensor 5 and an application position PA of the coating material to the coil spring W by the dispenser 7 are displaced by a specific angle about the specific axis Ax.

Here, in the present embodiment, the sensor 5 emits the linear laser light as described above, and measures the profile of the portion of the wire of the coil spring W that has reflected the linear laser light. Therefore, the measurement position PM corresponds to the position of the portion. In addition, in the present embodiment, the specific angle is 180°. Note that the specific angle is not limited to 180°, and other angles may be used.

[Configuration of Control Device]

Next, a configuration of the control device 3 will be described.

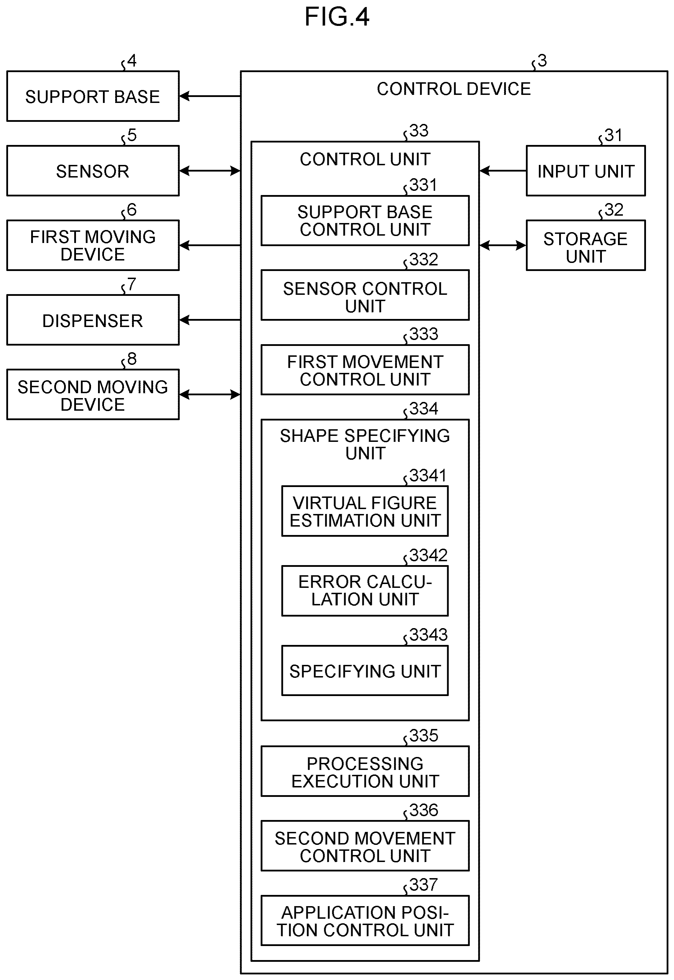

FIG. 4 is a block diagram illustrating a configuration of the control device 3.

The control device 3 controls the entire operation of the coating material application device 2. As illustrated in FIG. 4, the control device 3 includes an input unit 31, a storage unit 32, and a control unit 33.

The input unit 31 includes a button, a switch, a touch panel, and the like that receive a user operation, and outputs a signal corresponding to the user operation to the control unit 33.

In addition to various programs (including a control program according to the present invention) executed by the control unit 33, the storage unit 32 stores data and the like necessary for the control unit 33 to perform processing.

The control unit 33 is achieved by executing various programs stored in the storage unit 32 by a controller such as a central processing unit (CPU) or a micro processing unit (MPU), and controls the entire operation of the coating material application system 1. Note that the control unit 33 is not limited to the CPU or the MPU, and may be configured by an integrated circuit such as an application specific integrated circuit (ASIC) or a field-programmable gate array (FPGA). As illustrated in FIG. 4, the control unit 33 includes a support base control unit 331, a sensor control unit 332, a first movement control unit 333, a shape specifying unit 334 including a virtual figure estimation unit 3341, an error calculation unit 3342, and a specifying unit 3343, a processing execution unit 335, a second movement control unit 336, and an application device control unit 337. Here, the support base control unit 331 corresponds to a support mechanism control unit according to the present invention. In addition, the second movement control unit 336 corresponds to a movement control unit according to the present invention.

Note that detailed functions of the support base control unit 331, the sensor control unit 332, the first movement control unit 333, the shape specifying unit 334, the processing execution unit 335, the second movement control unit 336, and the application device control unit 337 will be described in "Control Method Executed by Control Device" described below.

[Control Method Executed by Control Device]

Next, a control method executed by the control device 3 will be described.

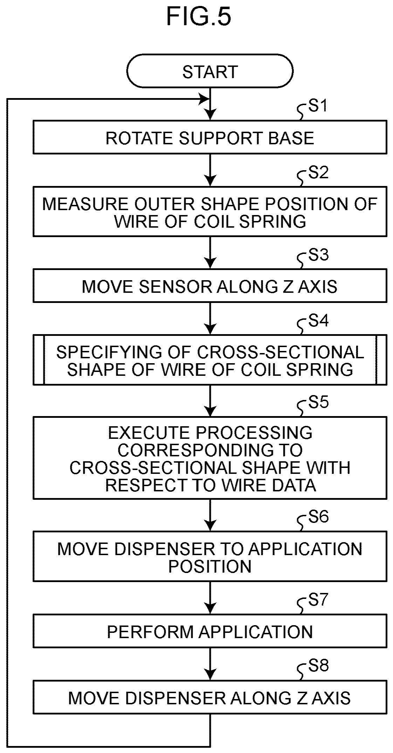

FIG. 5 is a flowchart illustrating a control method executed by the control device 3.

The operator installs the coil spring W to which application is performed on the support base 4. Then, the operator performs an application start operation with respect to the input unit 31. As a result, the control device 3 executes the control method described below.

First, the support base control unit 331 rotates the support base 4 about the specific axis Ax at a specific rotation speed (Step S1: support mechanism control step).

Here, the storage unit 32 stores data indicating the specific rotation speed. Then, in Step S1, the support base control unit 331 reads the data from the storage unit 32, and rotates the support base 4 at a rotation speed based on the data. Note that the data is configured such that the value of the rotation speed can be changed by a user operation on the input unit 31.

After Step S1, the sensor control unit 332 operates the sensor 5 to cause the sensor 5 to measure the outer shape position of the wire of the coil spring W. Then, the sensor control unit 332 acquires wire data from the sensor 5 (Step S2: sensor control step).

Here, as described above, the sensor 5 is configured to be able to measure the profile of the wire of the coil spring W. Then, the sensor 5 outputs, as the wire data, each position coordinate of a portion (a portion corresponding to the outer shape position of the wire of the coil spring W) of the wire of the coil spring W that has reflected the linear laser light output from the sensor 5.

After Step S2, the first movement control unit 333 operates the first moving device 6 to move the sensor 5 along the Z axis at a specific moving speed (Step S3). For example, the sensor 5 is positioned at a position where the position of the upper one end of the wire of the coil spring W installed on the support base 4 can be measured, and moves downward at the specific speed when Step S3 is executed. Note that, in the present embodiment, the sensor 5 is moved from the upper side to the lower side to apply the coating material from the upper one end to the lower other end of the wire of the coil spring W, and conversely, the sensor 5 may be moved from the lower side to the upper side to apply the coating material from the lower other end to the upper one end of the wire of the coil spring W.

Here, the storage unit 32 stores data indicating a distance over which the sensor 5 is moved along the Z axis every time the support base 4 is rotated, for example, 180°. Then, in Step S3, the first movement control unit 333 reads the data from the storage unit 32, and moves the sensor 5 at a moving speed based on the data. Note that the data is configured such that the value of the movement distance can be changed by a user operation on the input unit 31.

After Step S3, the shape specifying unit 334 specifies the cross-sectional shape of the wire of the coil spring W based on the wire data acquired in Step S2 (Step S4: shape specifying step).

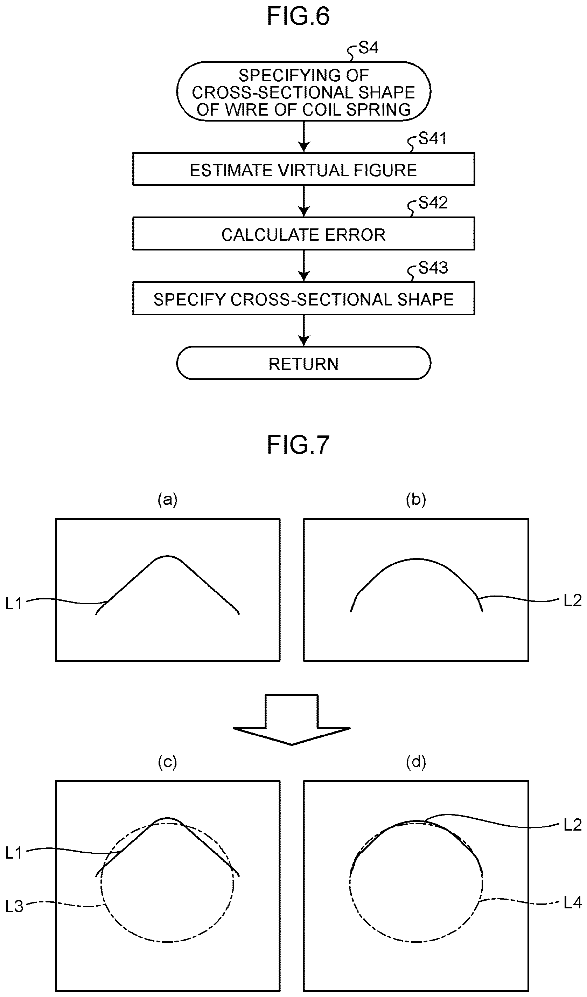

FIG. 6 is a flowchart illustrating the shape specifying step (Step S4). FIG. 7 is views describing the shape specifying step (Step S4). Specifically, solid lines L1 and L2 illustrated in (a) to (d) of FIG. 7 represent wire data (position coordinates of the portion of the wire of the coil spring W that has reflected the linear laser light output from the sensor 5). In addition, dashed-dotted lines L3 and L4 illustrated in (c) and (d) of FIG. 7 indicate virtual figures estimated by the virtual figure estimation unit 3341.

In Step S4, first, the virtual figure estimation unit 3341 estimates a virtual figure of a predetermined shape conforming to a shape configured by each position coordinate corresponding to the outer shape position of the wire of the coil spring W in the wire data acquired in Step S2 (Step S41).

In the present embodiment, a circle is adopted as the virtual figure of the predetermined shape. Then, in Step S41, using each position coordinate in the wire data acquired in Step S2, the virtual figure estimation unit 3341 estimates a circle (hereinafter, described as a virtual circle) most conforming to the shape configured by each position coordinate by, for example, the least squares method.

After Step S41, the error calculation unit 3342 calculates an error (for example, a mean square error) between each position coordinate in the wire data acquired in Step S2 and the virtual circle estimated in Step S41 (Step S42).

After Step S42, the specifying unit 3343 specifies the cross-sectional shape of the wire of the coil spring W based on the error calculated in Step S42 (Step S43).

For example, it is assumed that the wire data acquired in Step S2 is the data in (a) of FIG. 7 (when the cross-sectional shape of the wire at the measurement position PM is "rectangular" at the timing when the sensor 5 measures the outer shape position of the wire of the coil spring W in Step S2).

In this case, as illustrated in (c) of FIG. 7, an error between each position coordinate (solid line L1) in the wire data and the virtual circle (dashed-dotted line L3) estimated in Step S41 is relatively large. Then, in Step S43, the specifying unit 3343 compares the error calculated in Step S42 with a specific threshold, and specifies that the cross-sectional shape of the wire of the coil spring W is "rectangular" when the error is larger than the threshold.

In addition, for example, it is assumed that the wire data acquired in Step S2 is the data in (b) of FIG. 7 (when the cross-sectional shape of the wire at the measurement position PM is "circular" at the timing when the sensor 5 measures the outer shape position of the wire of the coil spring W in Step S2).

In this case, as illustrated in (d) of FIG. 7, an error between each position coordinate (solid line L2) in the wire data and the virtual circle (dashed-dotted line L4) estimated in Step S41 is relatively small. Then, in Step S43, the specifying unit 3343 compares the error calculated in Step S42 with the above-described threshold, and specifies that the cross-sectional shape of the wire of the coil spring W is "circular" when the error is equal to or less than the threshold.

After Step S4, the processing execution unit 335 executes processing corresponding to the cross-sectional shape of the wire of the coil spring W specified in Step S4 with respect to the wire data acquired in Step S2 (Step S5: processing execution step). In the present embodiment, the processing execution unit 335 calculates position coordinates P2(y,z) of the application position of the coating material to the coil spring W corresponding to the cross-sectional shape of the wire of the coil spring W specified in Step S4 by the processing.

Hereinafter, processing in a case where the cross-sectional shape of the wire of the coil spring W is specified as "circular" and processing in a case where the cross-sectional shape is specified as "rectangular" will be sequentially described.

First, the processing execution step (Step S5) when the cross-sectional shape of the wire of the coil spring W is specified as "circular" will be described.

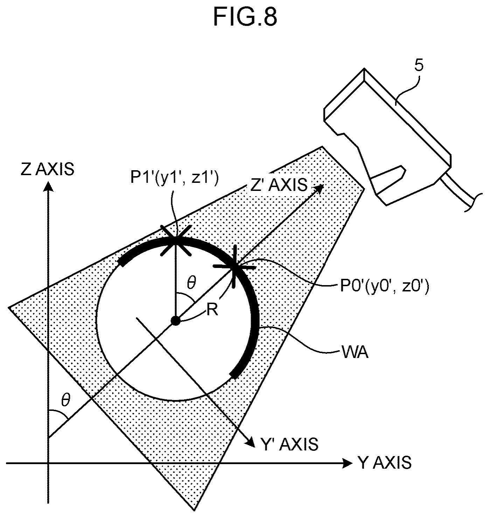

FIG. 8 is a view describing the processing execution step (Step S5) when the cross-sectional shape of the wire of the coil spring W is specified as "circular". Specifically, FIG. 8 illustrates an emission region (YZ plane) of the linear laser light emitted from the sensor 5. Note that, in FIG. 8, the emission region of the laser light is represented by dots. In addition, a Y' axis and a Z' axis illustrated in FIG. 8 are coordinate axes (hereinafter, described as sensor coordinate axes) measured by the sensor 5. Hereinafter, the coordinate axes of the Y axis and the Z axis are referred to as device coordinate axes in order to be distinguished from the sensor coordinate axes. In the present embodiment, as described above, the sensor 5 is installed to emit the laser light linearly along the YZ plane from the direction inclined 45° with respect to the Y axis and the Z axis. Therefore, the Y' axis and the Z' axis are rotated 45° with respect to the Y axis and the Z axis, respectively, as illustrated in FIG. 8. Note that the Z' axis corresponds to the direction of the laser light output from the sensor 5.

Specifically, first, the processing execution unit 335 extracts a position coordinate P0'(y0',z0') and a radius R from the wire data acquired in Step S2. The position coordinate P0'(y0',z0') is a position coordinate on the sensor coordinate axes, and is a position coordinate of the vertex of a portion WA (represented by the thick line in FIG. 8) of the wire of the coil spring W that has reflected the linear laser light output from the sensor 5. The radius R is a radius of a virtual circle (dashed-dotted line L4 in (d) of FIG. 7) including the portion WA. In addition, the processing execution unit 335 calculates a position coordinate P1'(y1',z1') of the application position on the portion WA by Formula (1) described below on the basis of the position coordinate P0'(y0',z0') and the radius R. Note that a position coordinate P1'(y1',z1') is a position coordinate on the sensor coordinate axes, and is a position coordinate having the highest coordinate value in the Z-axis direction on the virtual circle including the portion WA (FIG. 8). In addition, in Formula (1), $\theta$ is an angle corresponding to the installation position of the sensor 5, and is 45° in the present embodiment. The same applies to Formula (2) described below.

$$y1' = y0' - R \cdot \sin\theta$$
$$z1' = z0' - (R - R \cdot \cos\theta) \tag{1}$$

Next, the processing execution unit 335 converts the position coordinate P1'(y1',z1') on the sensor coordinate axes into a position coordinate P1(y1,z1) on the device coordinate axes by Formula (2) described below.
(Math. 2)

$$y1 = y1' \cdot \cos\theta - z1' \cdot \sin\theta$$
$$z1 = y1' \cdot \sin\theta + z1' \cdot \cos\theta \tag{2}$$

Finally, the processing execution unit 335 calculates a position coordinate P2(y2,z2) obtained by rotating the position coordinate P1(y1,z1) 180° about the specific axis Ax (Z axis), and calculates the position coordinate P2(y2,z2) as the application position.

Next, the processing execution step (Step S5) when the cross-sectional shape of the wire of the coil spring W is specified as "rectangular" will be described.

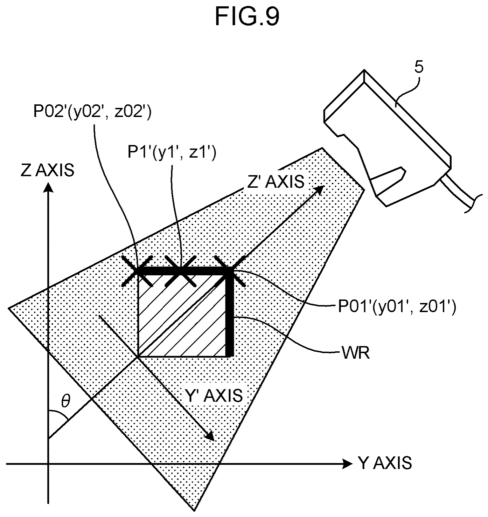

FIG. 9 is a view describing the processing execution step (Step S5) when the cross-sectional shape of the wire of the coil spring W is specified as "rectangular". Specifically, FIG. 9 is a view corresponding to FIG. 8.

Specifically, first, the processing execution unit 335 extracts position coordinates P01'(y01',z01') and P02'(y02',z02') from the wire data acquired in Step S2. The position coordinates P01'(y01',z01') and P02' (y02',z02') are position coordinates on the sensor coordinate axes, and are position coordinates of two edges having a high coordinate value in the Z-axis direction on a portion WR (represented by the thick line in FIG. 9) of the wire of the coil spring W that has reflected the linear laser light output from the sensor 5. Then, the processing execution unit 335 calculates a midpoint between the position coordinates P01'(y01',z01') and P02'(y02',z02') of the two edges as a position coordinate P1'(y1',z1') (FIG. 9). Thereafter, the processing execution unit 335 calculates position coordinates P1(y1,z1) and P2(y2,z2) from the position coordinate P1'(y1',z1') similarly to "the processing execution step (Step S5) when the cross-sectional shape of the wire of the coil spring W is specified as "circular"" described above.

After Step S5, the second movement control unit 336 operates the second moving device 8 to move the dispenser 7 to a position where the coating material is applied from the dispenser 7 to the application position (position coordinate P2(y2,z2)) (Step S6).

After Step S6, the application device control unit 337 operates the dispenser 7 at the application timing when the support base 4 is rotated only 180° about the specific axis Ax from a measurement timing, and causes the dispenser 7 to apply the coating material to the application position (position coordinate P2(y2,z2)) (Step S7). The measurement timing is timing at which the sensor 5 measures the position of the wire of the coil spring W in Step S2.

After Step S7, the second movement control unit 336 operates the second moving device 8 to move the dispenser 7 along the Z axis at a specific moving speed (Step S8). The specific moving speed is the same as the specific moving speed of the sensor 5 in Step S3.

By repeatedly executing Steps S1 to S8 described above, the coating material is applied from one end to the other end of the wire of the coil spring W.

According to the present embodiment described above, the effects described below are obtained.

In the wire data processing system according to the present embodiment, the control device 3 rotates the support base 4 about the specific axis Ax. In addition, the control device 3 operates the sensor 5 to acquire the wire data from the sensor 5. Further, the control device 3 specifies the cross-sectional shape of the wire of the coil spring W based on the wire data. Then, the control device 3 executes the processing corresponding to the cross-sectional shape of the wire of the coil spring W with respect to the wire data.

Therefore, even when the cross-sectional shape of the wire of the coil spring W differs depending on the position, appropriate processing corresponding to the cross-sectional shape can be executed with respect to the wire data.

For example, in the present embodiment, the wire data processing system is applied to the coating material application system 1 that applies the coating material to the coil spring W. Then, the control device 3 calculates the application position of the coating material to the coil spring W corresponding to the cross-sectional shape by executing the processing corresponding to the cross-sectional shape with respect to the wire data. In addition, the control device 3 moves the second moving device 8 to move the dispenser 7 to the position where the coating material is applied from the dispenser 7 to the application position, and operates the dispenser 7 to apply the coating material from the dispenser 7 to the application position.

Therefore, even when the cross-sectional shape of the wire of the coil spring W varies depending on the position, the application position to the coil spring W does not deviate from the desired position, and the coating material can be applied to the coil spring W with high accuracy.

In addition, in the present embodiment, the control device 3 estimates the virtual figure of the predetermined shape conforming to the shape configured by each position coordinate corresponding to the outer shape position of the wire of the coil spring W in the wire data. In particular, the control device 3 estimates a circle that is the virtual figure conforming to the shape configured by each position coordinate by the least squares method using each position coordinate. In addition, the control device 3 calculates an error between each position coordinate and the virtual figure. Then, the control device 3 specifies the cross-sectional shape of the coil spring W based on the error.

Therefore, the cross-sectional shape of the coil spring W can be accurately specified by a simple operation.

(Other Embodiments)

Although the mode for carrying out the present invention has been described so far, the present invention should not be limited only by the above-described embodiment.

In the above-described embodiment, the wire data processing system according to the present invention is applied to the coating material application system 1, but it is not limited thereto.

For example, the wire data processing system according to the present invention may be applied to a coil spring inspection system that inspects the coil spring W by executing the processing corresponding to the cross-sectional shape of the wire of the coil spring W with respect to the wire data to calculate the position coordinates of a specific portion and the dimensions of the specific portion according to the cross-sectional shape.

In addition, for example, the wire data processing system according to the present invention may be applied to a coil spring processing system that executes the processing corresponding to the cross-sectional shape of the wire of the coil spring W with respect to the wire data to calculate the position coordinates of a specific portion according to the cross-sectional shape and performs processing on the position of the position coordinates in the coil spring W.

In the above-described embodiment, a circle is adopted as the virtual figure according to the present invention, but it is not limited thereto, and a rectangle may be adopted. That is, the virtual figure according to the present invention may have any shape as long as the shape corresponds to the cross-sectional shape of the wire of the coil spring W. For example, when the cross-sectional shape of the wire at a certain position of the coil spring W is a triangular shape, a triangle may be adopted as the virtual figure according to the present invention.

In the above-described embodiment, the coil spring W in which the cross-sectional shape of the wire varies depending on the position is adopted as the coil spring according to the present invention, but it is not limited thereto, and a coil spring in which the cross-sectional shape of the wire has the same shape depending on the position may be adopted.

In the above-described embodiment, the first moving device 6 moves the sensor 5 only on the one axis, the Z axis, but it is not limited thereto, and the sensor 5 may be configured to be movable in the Y axis or an X axis direction in addition to the Z axis. Similarly, the second moving device 8 moves the dispenser 7 only on the two axes, the Z axis and the Y axis, but it is not limited thereto, and the dispenser 7 may be configured to be movable in the X axis direction in addition to the Z axis and the Y axis.

In the above-described embodiment, the first moving device 6 moves the sensor 5 along the Z axis with respect to the coil spring W, but it is not limited thereto, and the coil spring W (support base 4) may be moved along the Z axis with respect to the sensor 5. In addition, the first moving device 6 may not be provided when the measurement range of the sensor 5 extends over the entire coil spring W.

In the above-described embodiment, the second movement control unit 336 operates the second moving device 8 to move the dispenser 7 to a position where the coating material is applied from the dispenser 7 to the application position (position coordinate P2(y2,z2)), but it is not limited thereto. The second movement control unit 336 is only required to relatively move the dispenser 7 and the support base 4 to position the dispenser 7 at a position where the coating material is applied from the dispenser 7 to the application position (position coordinate P2(y2,z2)), and for example, the support base 4 may be moved with respect to the dispenser 7.

In the above-described embodiment, a laser sensor is adopted as the sensor 5, but it is not limited thereto, and a camera, a time of flight (TOF) sensor, or the like may be adopted as long as the outer shape position of the wire of the coil spring W can be measured.

In the above-described embodiment, the support base 4 is adopted as the support mechanism according to the present invention, but it is not limited thereto, and other configurations may be adopted as long as the coil spring W is supported and the coil spring W can be rotated about the specific axis Ax following the central axis of the coil spring W.

For example, a configuration may be adopted in which a robotic arm is adopted as the support mechanism according to the present invention and the coil spring W is rotated about a specific axis following the central axis of the coil spring W while suspending the coil spring W with the robotic arm.

In addition, for example, as the support mechanism according to the present invention, a configuration may be adopted in which the coil spring W is supported in a position in which the central axis of the coil spring W faces the horizontal direction, and the coil spring W is rotated about a specific axis following the central axis.

Reference Signs List

**[0099]**

　　　　1 COATING MATERIAL APPLICATION SYSTEM
　　　　2 COATING MATERIAL APPLICATION DEVICE
　　　　3 CONTROL DEVICE
　　　　4 SUPPORT BASE
　　　　5 SENSOR
　　　　6 FIRST MOVING DEVICE
　　　　7 DISPENSER
　　　　8 SECOND MOVING DEVICE
　　　　31 INPUT UNIT
　　　　32 STORAGE UNIT
　　　　33 CONTROL UNIT
　　　　61 SLIDER
　　　　62 GUIDE RAIL
　　　　81 SLIDER
　　　　82, 83 GUIDE RAIL
　　　　331 SUPPORT BASE CONTROL UNIT
　　　　332 SENSOR CONTROL UNIT
　　　　333 FIRST MOVEMENT CONTROL UNIT
　　　　334 SHAPE SPECIFYING UNIT
　　　　335 PROCESSING EXECUTION UNIT
　　　　336 SECOND MOVEMENT CONTROL UNIT
　　　　337 APPLICATION DEVICE CONTROL UNIT
　　　　3341 VIRTUAL FIGURE ESTIMATION UNIT
　　　　3342 ERROR CALCULATION UNIT
　　　　3343 SPECIFYING UNIT
　　　　AR DIRECTION
　　　　Ax SPECIFIC AXIS

L1, L2 SOLID LINE
L3, L4 DASHED-DOTTED LINE
PA APPLICATION POSITION
PM MEASUREMENT POSITION
W COIL SPRING
WA, WR PORTION

**Claims**

1. A wire data processing system comprising:

   a support mechanism configured to support a coil spring and enable the coil spring to rotate about a specific axis following a central axis of the coil spring;
   a sensor configured to measure an outer shape position of a wire of the coil spring and output wire data; and
   a control device configured to control operations of the support mechanism and the sensor,
   wherein the control device includes

   a support mechanism control unit configured to operate the support mechanism and rotate the coil spring about the specific axis,
   a sensor control unit configured to operate the sensor and acquire the wire data from the sensor,
   a shape specifying unit configured to specify a cross-sectional shape of the wire based on the wire data, and
   a processing execution unit configured to execute processing corresponding to the cross-sectional shape of the wire with respect to the wire data.

2. The wire data processing system according to claim 1, wherein the shape specifying unit includes

   a virtual figure estimation unit configured to estimate a virtual figure of a predetermined shape conforming to a shape configured by position coordinates corresponding to an outer shape position of the wire in the wire data,
   an error calculation unit configured to calculate an error between the position coordinates and the virtual figure, and
   a specifying unit configured to specify a cross-sectional shape of the wire based on the error.

3. The wire data processing system according to claim 2, wherein the virtual figure estimation unit is configured to estimate a circle that is the virtual figure conforming to the shape configured by the position coordinates by a least squares method using the position coordinates.

4. The wire data processing system according to claim 1, wherein the coil spring has a cross-sectional shape of the wire that varies depending on a position.

5. The wire data processing system according to claim 1, further comprising:

   an application device configured to apply a coating material to the coil spring, wherein
   the processing execution unit is configured to calculate an application position of the coating material to the coil spring corresponding to the cross-sectional shape of the wire by executing processing corresponding to the cross-sectional shape of the wire with respect to the wire data, and
   the control device includes

   a movement control unit configured to move the application device and the support mechanism relative to each other and positions the application device at a position where the coating material is applied from the application device to the application position, and
   an application device control unit configured to operate the application device to apply the coating material from the application device to the application position.

6. The wire data processing system according to claim 5, further comprising:

   a moving device configured to support the application device and move the application device, wherein
   the movement control unit is configured to

operate the moving device and
position the application device at a position where the coating material is applied from the application device to the application position.

7. A control device comprising:

a support mechanism control unit configured to operate a support mechanism that supports a coil spring and rotates the coil spring about a specific axis following a central axis of the coil spring;
a sensor control unit configured to

operate a sensor that measures an outer shape position of a wire of the coil spring and outputs wire data, and acquire the wire data;

a shape specifying unit configured to specify a cross-sectional shape of the wire based on the wire data; and
a processing execution unit configured to execute processing corresponding to the cross-sectional shape of the wire with respect to the wire data.

8. A control method executed by a control device of a wire data processing system, the method comprising:

a support mechanism control step of

operating a support mechanism configured to support a coil spring and rotating the coil spring about a specific axis following a central axis of the coil spring;

a sensor control step of

operating a sensor configured to measure an outer shape position of a wire of the coil spring and output wire data, and
acquiring the wire data;

a shape specifying step of specifying a cross-sectional shape of the wire based on the wire data; and
a processing execution step of executing processing corresponding to the cross-sectional shape of the wire with respect to the wire data.

9. A control program for causing a computer to execute:

a support mechanism control step of

operating a support mechanism configured to support a coil spring and rotating the coil spring about a specific axis following a central axis of the coil spring;

a sensor control step of

operating a sensor configured to measure an outer shape position of a wire of the coil spring and output wire data, and
acquiring the wire data;

a shape specifying step of specifying a cross-sectional shape of the wire based on the wire data; and
a processing execution step of executing processing corresponding to the cross-sectional shape of the wire with respect to the wire data.

# FIG.1

# FIG.2

# FIG.3

# FIG.4

SUPPORT BASE — 4

CONTROL DEVICE — 3

SENSOR — 5

FIRST MOVING DEVICE — 6

DISPENSER — 7

SECOND MOVING DEVICE — 8

CONTROL UNIT — 33

INPUT UNIT — 31

SUPPORT BASE CONTROL UNIT — 331

STORAGE UNIT — 32

SENSOR CONTROL UNIT — 332

FIRST MOVEMENT CONTROL UNIT — 333

SHAPE SPECIFYING UNIT — 334

VIRTUAL FIGURE ESTIMATION UNIT — 3341

ERROR CALCU-LATION UNIT — 3342

SPECIFYING UNIT — 3343

PROCESSING EXECUTION UNIT — 335

SECOND MOVEMENT CONTROL UNIT — 336

APPLICATION POSI-TION CONTROL UNIT — 337

# FIG.5

```
                    ┌──────────────────┐
                    │      START       │
                    └──────────────────┘
                             │
                             ▼              ⌐S1
              ┌────────────────────────────────┐
              │      ROTATE SUPPORT BASE        │
              └────────────────────────────────┘
                             │
                             ▼              ⌐S2
              ┌────────────────────────────────┐
              │  MEASURE OUTER SHAPE POSITION OF │
              │      WIRE OF COIL SPRING         │
              └────────────────────────────────┘
                             │
                             ▼              ⌐S3
              ┌────────────────────────────────┐
              │     MOVE SENSOR ALONG Z AXIS    │
              └────────────────────────────────┘
                             │
                             ▼              ⌐S4
              ┌────────────────────────────────┐
              │  SPECIFYING OF CROSS-SECTIONAL  │
              │   SHAPE OF WIRE OF COIL SPRING  │
              └────────────────────────────────┘
                             │
                             ▼              ⌐S5
              ┌────────────────────────────────┐
              │      EXECUTE PROCESSING         │
              │       CORRESPONDING TO          │
              │  CROSS-SECTIONAL SHAPE WITH     │
              │     RESPECT TO WIRE DATA        │
              └────────────────────────────────┘
                             │
                             ▼              ⌐S6
              ┌────────────────────────────────┐
              │  MOVE DISPENSER TO APPLICATION  │
              │           POSITION              │
              └────────────────────────────────┘
                             │
                             ▼              ⌐S7
              ┌────────────────────────────────┐
              │      PERFORM APPLICATION        │
              └────────────────────────────────┘
                             │
                             ▼              ⌐S8
              ┌────────────────────────────────┐
              │   MOVE DISPENSER ALONG Z AXIS   │
              └────────────────────────────────┘
```

# FIG.6

```
                                    ⌐S4
              ╭─────────────────────────╮
              │     SPECIFYING OF       │
              │  CROSS-SECTIONAL SHAPE  │
              │  OF WIRE OF COIL SPRING │
              ╰─────────────────────────╯
                          │
                          ▼            ⌐S41
              ┌─────────────────────────┐
              │   ESTIMATE VIRTUAL FIGURE │
              └─────────────────────────┘
                          │
                          ▼            ⌐S42
              ┌─────────────────────────┐
              │     CALCULATE ERROR      │
              └─────────────────────────┘
                          │
                          ▼            ⌐S43
              ┌─────────────────────────┐
              │ SPECIFY CROSS-SECTIONAL SHAPE │
              └─────────────────────────┘
                          │
                          ▼
              ╭─────────────────────────╮
              │         RETURN          │
              ╰─────────────────────────╯
```

# FIG.7

(a)                          (b)

L1                                                    L2

(c)                          (d)

L1                                                    L2

L3                                                    L4

# FIG.8

# FIG.9

## INTERNATIONAL SEARCH REPORT

| International application No. |
|---|
| **PCT/JP2024/017990** |

### A. CLASSIFICATION OF SUBJECT MATTER

*B05C 9/10*(2006.01)i; *B05C 13/02*(2006.01)i; *G01B 11/24*(2006.01)i
FI: B05C9/10; G01B11/24 Z; B05C13/02

According to International Patent Classification (IPC) or to both national classification and IPC

### B. FIELDS SEARCHED

Minimum documentation searched (classification system followed by classification symbols)

B05C9/10; B05C13/02; G01B11/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2016/104651 A1 (CHUO HATSUJO KABUSHIKI KAISHA) 30 June 2016 (2016-06-30) paragraphs [0024]-[0072], fig. 1-21 | 1-9 |
| Y | JP 2017-180537 A (MICRO HATSUJO KK) 05 October 2017 (2017-10-05) paragraphs [0035]-[0050], fig. 6-9 | 1-9 |
| Y | JP 2007-308067 A (TOYOTA JIDOSHA KABUSHIKI KAISHA) 29 November 2007 (2007-11-29) paragraphs [0017]-[0021], fig. 4-5 | 1-9 |
| A | WO 2022/017785 A1 (WAFIOS AKTIENGESELLSCHAFT) 27 January 2022 (2022-01-27) entire text, all drawings | 1-9 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

INTERNATIONAL SEARCH REPORT
Information on patent family members

International application No.

**PCT/JP2024/017990**

| Patent document cited in search report | | | Publication date (day/month/year) | Patent family member(s) | Publication date (day/month/year) |
|---|---|---|---|---|---|
| WO | 2016/104651 | A1 | 30 June 2016 | (Family: none) | |
| JP | 2017-180537 | A | 05 October 2017 | (Family: none) | |
| JP | 2007-308067 | A | 29 November 2007 | (Family: none) | |
| WO | 2022/017785 | A1 | 27 January 2022 | EP          4182101          A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010101693 A
- JP 62155342 A